# EUROPÄISCHE PATENTSCHRIFT

(11) **EP 2 404 036 B1**
(45) Veröffentlichungstag und Bekanntmachung des Hinweises auf die Patenterteilung: **20.04.2016**
(21) Anmeldenummer: 10713551.9
(22) Anmeldetag: 27.02.2010
(51) Int. Cl.: F01D 5/34, B23K 13/01, B23K 20/12, F01D 5/16

(54) **VERFAHREN ZUR HERSTELLUNG EINES INTEGRAL BESCHAUFELTEN ROTORS**
METHOD FOR PRODUCING AN INTEGRALLY BLADED ROTOR
PROCÉDÉ DE FABRICATION D'UN ROTOR AUBAGÉ MONOBLOC

(30) Priorität: 05.03.2009 DE 102009011963
(43) Veröffentlichungstag der Anmeldung: 11.01.2012
(73) Patentinhaber: MTU Aero Engines AG, 80995 München (DE)
(72) Erfinder: STIEHLER, Frank, 04924 Bad Liebenwerda (DE)
(86) Internationale Anmeldenummer: PCT/DE2010/000221
(87) Internationale Veröffentlichungsnummer: WO 2010/099782

(56) Entgegenhaltungen:
- EP-A2- 1 239 116
- DE-A1- 3 909 733
- DE-A1- 10 361 882
- US-A- 5 562 419
- US-A1- 2003 223 872
- US-B1- 6 241 471

## Beschreibung

Die Erfindung betrifft ein Verfahren zur Herstellung eines integral beschaufelten Rotors, insbesondere eines Rotors einer Gasturbine.

Gasturbinenrotoren mit integraler Beschaufelung bezeichnet man abhängig davon, ob ein im Querschnitt scheibenförmiger oder ein im Querschnitt ringförmiger Rotor bzw. Rotorträger (im folgenden Rotorgrundkörper genannt) vorhanden ist, als Blisk bzw. Bling. Blisk ist die Kurzform von Bladed Disk und Bling von Bladed Ring.

Aus dem Stand der Technik ist es bekannt, Gasturbinenrotoren mit integraler Beschaufelung durch Fräsen aus dem Vollen herzustellen, was natürlich sehr aufwendig und teuer ist, weshalb dieses Verfahren nur für relativ kleine Gasturbinenrotoren Verwendung gefunden hat.

Ein anderes, bei großen Rotoren Anwendung findendes Verfahren ist das Reibschweißen eines Rotorgrundkörpers an einen Schaufelkranz aus separat hergestellten Schaufeln. Die Schaufeln werden hierzu in einem ersten Schritt zu einem Schaufelkranz zusammengefügt und anschließend an dem Rotorgrundkörper befestigt. Aufgrund der Struktur eines solchen Schaufelkranzes ist ein Austausch einzelner Schaufeln, beispielsweise zur Reparatur des Rotors, bei solchen Rotoren nicht vorgesehen und schwierig.

Ein Verfahren nach dem Oberbegriff von Anspruch 1 ist aus der DE 103 61 882 A1 bekannt. Ferner sei der Vollständigkeit halber auch noch auf die EP 1 239 116 A2 verwiesen.

Aufgabe der Erfindung ist es, ein Verfahren zum Herstellen eines integral beschaufelten Rotors zu schaffen, mit dem einzelne Schaufeln unabhängig von den anderen Schaufeln an den Rotorgrundkörper angefügt werden können.

Das erfindungsgemäße Verfahren sieht hierzu vor, dass ein Rotorgrundkörper mit ersten Schweißkontaktflächen und Schaufeln, die einen Schaufelhals mit einer zweiten Schweißkontaktfläche aufweisen, bereitgestellt werden. Daraufhin werden die Schaufeln an der ersten und der zweiten Schweißkontaktfläche derart an den Rotorgrundkörper angeschweißt, dass in Umfangsrichtung benachbarte Schaufelhälse des Rotors voneinander beabstandet sind und ein Freiraum zwischen benachbarten Schaufelhälsen vorgesehen ist. Der Freiraum zwischen den beabstandeten Schaufelhälsen stellt genügend Bauraum zur Verfügung, um einzelne Schaufeln unabhängig von den benachbarten Schaufeln an den Rotorgrundkörper anfügen zu können. Die Schaufelhälse sind also vollständig und nicht nur abschnittsmäßig voneinander beabstandet.

Vorzugsweise sind die Schaufeln monokristallin. Monokristalline Schaufeln sind insbesondere bei hohen Temperaturen im Turbinenabschnitt von Gasturbinen belastungsfähiger.

Der Rotorgrundkörper kann polykristallin sein. Da der Rotorgrundkörper geringer belastet wird als die Schaufeln, kann der Rotorgrundkörper aus kostengünstigerem polykristallinen Material hergestellt sein.

Gemäß der bevorzugten Ausführungsform sind die Schaufeln durch oszillierendes Reibschweißen oder induktives Hochfrequenzpressschweißen am Rotorgrundkörper angeschweißt. Dies ermöglicht auch das Schweißen von Materialien, bei denen keine Schmelzschweißverfahren möglich sind, z.B. die Materialpaarung monokristallin/polykristallin.

Vorzugsweise werden die Schaufeln durch lineares Reibschweißen am Rotorgrundkörper angeschweißt.

Erfindungsgemäß wird nach dem Schweißen ein Einsatzstück in den Freiraum zwischen die Schaufelhälse benachbarter Schaufeln eingebracht. Auf diese Weise werden die Freiräume zwischen den Schaufelhälsen aufgefüllt.

Vorzugsweise bildet das Einsatzstück eine Dichtung zwischen den Schaufelhälsen. Somit wirken sich die strömungstechnischen Verhältnisse des Rotors nicht negativ auf die Freiräume zwischen benachbarten Schaufelhälsen aus.

Vorteilhafterweise ist das Einsatzstück ein Dämpfungselement. Auf diese Weise können Schwingungen einer Schaufel gedämpft und die Übertragung auf benachbarte Schaufeln vermindert werden.

Die Einsatzstücke begrenzen vorzugsweise mit ihren radialen Außenflächen abschnittsweise den gasdurchströmten Ringraum der Turbine.

Mehrere Einsatzstücke sind erfindungsgemäß miteinander verbunden. Somit wird die Anzahl der Einzelteile bei der Herstellung des Rotors verringert.

Vorzugsweise sind alle Einsatzstücke zu einem Ring verbunden, welcher in axialer Richtung in den Rotor eingesetzt wird. Dies ermöglicht eine einfache Montage der Einsatzstücke.

Ein Kanal kann zwischen Einsatzstück und Rotorgrundkörper vorgesehen sein, wobei der Kanal insbesondere als Kanal für ein Kühlungsfluid vorgesehen sein kann. Auf diese Weise wird das Einsatzstück vom Rotorgrundkörper entkoppelt und ermöglicht eine effektive Kühlung im Bereich des Schaufelhalses.

Der Kanal zwischen Einsatzstück und Rotorgrundkörper wird beispielsweise wenigstens teilweise durch eine Einkerbung im Rotorgrundkörper und/oder den Schaufeln gebildet. Somit kann der Kanal auf einfache Weise vergrößert werden.

Es ist möglich, dass das Einsatzstück formschlüssig oder stoffschlüssig mit den benachbarten Schaufeln und/oder mit dem Rotorgrundkörper verbunden ist. Dies erhöht die mechanische Stabilität des Rotors.

Vorzugsweise haben die Schaufeln ein radial äußeres Deckband. Ein radial äußeres Deckband verstärkt die mechanische Struktur des Rotors und dämpft Schwingungen der Schaufelblätter.

Die Schaufeln können an ihren radial äußeren Enden ein Deckbandsegment angeformt haben. Dies ermöglicht eine einstückige Herstellung des radial äußeren Deckbands mit den Schaufeln.

Die Deckbandsegmente können nach dem Anschweißen der Schaufeln umfangsmäßig beabstandet sein oder aneinander anliegen.

Vorzugsweise sind die Deckbandsegmente miteinander in Eingriff. Auf diese Weise wird die Dämpfungsfunktion des Deckbands verbessert.

Gemäß einer weiteren Verfahrensvariante wird nach dem Schweißen eine Verschlusseinrichtung an den Deckbandsegmenten angebracht, die eine umfangsmäßig durchgehende Deckbandeinrichtung erzeugt. Somit können die Schaufeln während des Schweißens auch im Bereich des äußeren Deckbands zueinander beweglich sein und anschließend durch die Verschlusseinrichtung verbunden werden.

Darüber hinaus wird ein Reparaturverfahren für einen nach einem erfindungsgemäßen Verfahren hergestellten Rotor mit Einsatzstücken zwischen benachbarten Schaufelhälsen offenbart, das nicht in den beanspruchten Schutzbereich fällt. In einem ersten Verfahrensschritt werden die Einsatzstücke zu den benachbarten Schaufeln der beschädigten Schaufel entfernt. Die beschädigte Schaufel wird in einem zweiten Verfahrensschritt entfernt. Daraufhin wird eine neue Schaufel eingefügt, und abschließend werden Einsatzstücke in die Freiräume neben der neuen Schaufel aingefügt. Dies ermöglicht den unabhängigen Austausch einer einzigen Schaufel eines integral beschaufelten Rotors.

Weitere Merkmale und Vorteile der Erfindung ergeben sich aus der nachfolgenden Beschreibung und aus den Zeichnungen, auf die Bezug genommen wird. In den Zeichnungen zeigen:
- Figur 1 einen Abschnitt eines Rotors, der nach einem erfindungsgemäßen Verfahren hergestellt wurde, mit voneinander beabstandeten Schaufelhälsen;
- Figur 2 den Rotor aus Figur 1 mit eingesetzten Dämpfungselementen;
- Figur 3 eine weitere Ansicht des Rotors gemäß Figur 2; und
- Figur 4 eine Detailansicht des Schaufelhalsbereichs des Rotors gemäß Figur 2.

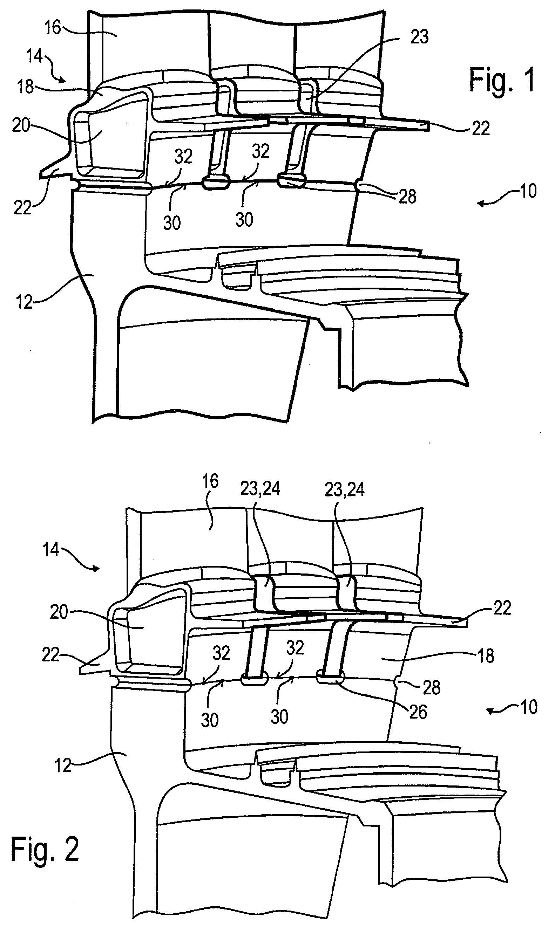

Figur 1 zeigt einen Abschnitt eines integral beschaufelten Rotors 10 mit einem Rotorgrundkörper 12, auf dem mehrere Schaufeln 14 befestigt sind. Der Rotor 10 ist für eine Gasturbine ausgelegt, wobei er im Turbinenabschnitt oder im Verdichterabschnitt angeordnet sein kann. Die Erfindung lässt sich natürlich auch auf Rotoren anderer Strömungsmaschinen anwenden.

Die Schaufeln 14 weisen ein Schaufelblatt 16 und einen einstückig angeformten Schaufelhals 18 auf. Der Schaufelhals 18 hat auf den in Umfangsrichtung gelegenen Seiten eine Ausnehmung 20, die eine Reduktion des Gewichts der Schaufeln 14 und eine Leichtbauweise des Rotors 10 ermöglicht. In axialer Richtung weisen die Schaufelhälse 18 Fortsätze 22 auf, die zusammen ein inneres Deckband bilden, welches mit seiner radial nach außen gerichteten Fläche den gasdurchströmten Ringraum der Strömungsmaschine begrenzt.

Die Schaufeln 14 haben an ihren radial äußeren Enden ein Deckbandsegment angeformt (in den Figuren nicht gezeigt). Die benachbarten Deckbandsegmente liegen aneinander an, und eine Verschlusseinrichtung ist optional an den Deckbandsegmenten angebracht, die die Deckbandsegmente z.B. zueinander verspannt und eine umfangsmäßig durchgehende Deckbandeinrichtung erzeugt. Die Deckbandsegmente können auch miteinander in Eingriff sein.

Die Schaufeln 14 sind über die Schaufelhälse 18 mit dem Rotorgrundkörper 12 verbunden. In der gezeigten Ausführungsform sind Rotorgrundkörper 12 und Schaufeln 14 unmittelbar miteinander verschweißt.

Es ist zu beachten, dass die Schaufeln 14 aus Materialien gefertigt sind, die keine Schmelzschweißverfahren erlauben, beispielsweise einkristalline Materialien. Die Schaufeln 14 werden daher über oszillierende Reibschweißverfahren, insbesondere Linearreibschweißverfahren, oder induktives Hochfrequenzpressschweißen mit dem Rotorgrundkörper 12 verbunden.

Die Schaufeln 14 sind ferner insbesondere im Bereich des Schaufelhalses 18 voneinander in Umfangsrichtung beabstandet, wodurch ein Freiraum 23 zwischen den Schaufeln 14 gebildet wird. Die Schaufelhälse 18 sind vollständig voneinander beabstandet, und es besteht kein Kontakt zwischen benachbarten Schaufelhälsen 18.

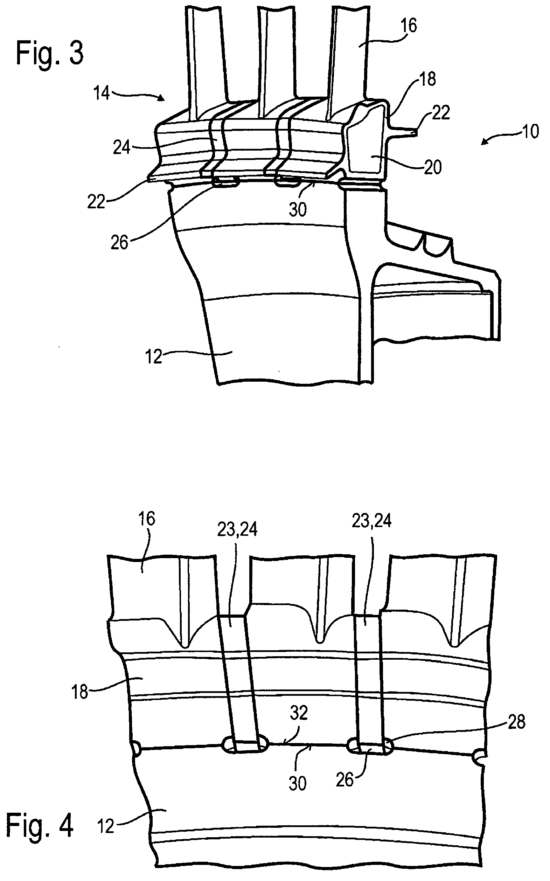

Die Figuren 2 und 3 zeigen, dass zwischen den Schaufelhälsen 18 Einsatzstücke 24 eingesetzt sind. Figur 4 zeigt eine Detailansicht des Schaufelhalsbereichs mit eingesetzten Einsatzstücken 24. Die Einsatzstücke 24 bilden eine Dichtung zwischen den Schaufelhälsen 18 benachbarter Schaufeln 14 und besitzen z.B. die Funktion eines Dämpfungselements, welches eine Übertragung von Schwingungen einer Schaufel 14 auf benachbarte Schaufeln 14 vermindert. Die Einsatzstücke 24 sind formschlüssig und/oder stoffschlüssig und/oder über eine Presspassung mit den benachbarten Schaufelhälsen 18 verbunden. Natürlich ist es auch möglich, dass die Einsatz stücke 24 entsprechend mit dem Rotorgrundkörper 12 verbunden sind.

Die Einsatzstücke 24 füllen den Freiraum zwischen den benachbarten Schaufelhälsen 18 und dichten diesen Freiraum zum Strömungskanal der Strömungsmaschine ab. Die Form der Einsatzstücke 24 ist an die Form der Schaufelhälse 18 angepasst, insbesondere im Bereich der Fortsätze 22. Die radial nach außen gerichtete Fläche des Einsatzstückes 24 begrenzt somit den gasdurchströmten Ringraum der Strömungsmaschine.

In der gezeigten Ausführungsform sind die Einsatzstücke 24 als einzelne Einsatzstücke zwischen je zwei benachbarten Schaufeln 14 angeordnet. Es können auch mehrere Einsatzstücke 24 miteinander verbunden sein. Auf diese Weise lassen sich einerseits die Einsatzstücke 24 miteinander koppeln, andererseits vermindert sich die Anzahl der Einzelteile bei der Herstellung des Rotors 10. Ferner können mehrere Einsatzstücke 24 an einen axial aufsetzbaren Ring angebracht sein. Ein solcher Ring kann selbsttragend ausgeführt sein, wodurch seine Masse nicht zur Last des Rotors 10 oder des Rotorgrundkörpers 12 im Betrieb beiträgt.

Zwischen den Einsatzstücken 24 und dem Rotorgrundkörper 12 sind Kanäle 26 vorgesehen, die durch eine Einkerbung 28 im Rotorgrundkörper 12 und im Schaufelhals 18 gebildet sind.

Die Kanäle 26 dienen als Kühlkanäle, indem sie von einem Kühlfluid durchströmt werden, und ermöglichen einen Fluss von Kühlfluid in axialer Richtung von der axial vorderen zur axial hinteren Seite des Rotors 10.

Als Material für die Einsatzstücke 24 kommen insbesondere Ni-Basislegierungen in Frage. Das Material sollte weicher sein als das benachbarter Schaufelhälse 18.

Der in den Figuren 1 bis 4 gezeigte Rotor 10 wird nach dem im folgenden beschriebenen Verfahren hergestellt. In einem ersten Verfahrensschritt wird der Rotorgrundkörper 12 bereitgestellt. Am äußeren Umfang des Rotorgrundkörpers 12 sind mehrere erste Schweißkontaktflächen 30 vorgesehen, deren Anzahl der Anzahl der Schaufeln 14 entspricht, die mit dem Rotorgrundkörper 12 integral verbunden werden sollen. Es ist auch möglich, dass eine erste Schweißkontaktfläche 30 für mehrere Schaufeln 14 vorgesehen ist und insbesondere dass eine einzige erste Schweißkontaktfläche 30 für alle zu verbindenden Schaufeln 14 vorgesehen ist.

In einem zweiten Verfahrensschritt werden die am Rotorgrundkörper 12 anzubringenden Schaufeln 14 bereitgestellt. Die Schaufeln 14 weisen an ihrem Schaufelhals 18 eine zweite Schweißkontaktfläche 32 auf.

In einem dritten Verfahrensschritt werden die Schaufeln 14 an der ersten und der zweiten Schweißkontaktfläche 30, 32 an den Rotorgrundkörper 12 angeschweißt, wobei in Umfangsrichtung benachbarte Schaufelhälse 18 des Rotors 10 voneinander beabstandet sind und ein Freiraum zwischen benachbarten Schaufelhälsen 18 vorgesehen ist. Die Schaufeln 14 werden einzeln, nacheinander an den Rotorgrundkörper 12 angeschweißt. Alternativ ist es möglich, mehrere Schaufeln 14 gleichzeitig an den Rotorgrundkörper 12 anzuschweißen und insbesondere alle Schaufeln 14 gemeinsam an den Rotorgrundkörper 12 anzuschweißen.

Das Anschweißen einer einzelnen Schaufel 14 unabhängig von den benachbarten Schaufeln 14 wird durch den Freiraum zwischen benachbarten Schaufelhälsen 18 ermöglicht, da auf diese Weise ausreichend Bauraum zur Durchführung des Schweißverfahrens zur Verfügung steht.

Da die Materialien der Schaufeln 14 keine Schmelzschweißverfahren erlauben, werden die Schaufeln 14 durch oszillierendes Reibschweißen, lineares Reibschweißen oder induktives Hochfrequenzpressschweißen am Rotorgrundkörper 12 angeschweißt.

Der Rotor 10 kann nach dem Anschweißen der Schaufeln 14 an den Rotorgrundkörper 12 nachbearbeitet werden, wobei insbesondere die Schweißwülste entfernt und Einkerbungen im Rotorgrundkörper und den Schaufeln angebracht werden können, die wenigstens teilweise die Kanäle 26 bilden.

Nach dem Schweißen werden die Einsatzstücke 24 in den Freiraum zwischen den Schaufelhälsen 18 eingebracht. Die Einsatzstücke 24 werden dabei formschlüssig und/oder stoffschlüssig und/oder über eine Presspassung mit den benachbarten Schaufelhälsen 18 verbunden.

Das Einsatzstück 24 bildet eine Dichtung zwischen den Schaufelhälsen und wirkt als Dämpfungselement zwischen benachbarten Schaufeln 14.

Die Deckbandsegmente, die an den radial äußeren Enden der Schaufeln 14 angeformt sind, sind während des Schweißens vorzugsweise zueinander beweglich angeordnet, sie können aber auch aneinander anliegen oder umfangsmäßig beabstandet sein.

Nach dem Schweißen können die Deckbandsegmente miteinander in Eingriff gebracht werden und/oder durch eine Verschlusseinrichtung zu einer umfangsmäßig durchgehenden Deckbandeinrichtung verbunden werden. Es ist auch möglich, dass die Deckbandsegmente vor dem Schweißen verbunden werden, falls das Schweißverfahren dadurch nicht beeinträchtigt wird.

Ein nach dem oben beschriebenen Verfahren hergestellter Rotor ermöglicht ein im folgenden beschriebenes Reparaturverfahren. Bei Beschädigung einer Schaufel 14 werden zuerst die Einsatzstücke 24 zu den benachbarten Schaufeln 14 der beschädigten Schaufel 14 entfernt. Auf diese Weise wird Bauraum um den Schaufelhals 18 der beschädigten Schaufel 14 bereitgestellt, und die beschädigte Schaufel 14 wird unabhängig von den benachbarten Schaufeln 14 vom Rotorgrundkörper entfernt. An der Stelle der entfernten Schaufel 14 entsteht eine erste Schweißkontaktfläche 30. Falls benötigt, kann die erste Schweißkontaktfläche 30 nach dem Entfernen der beschädigten Schaufel 14 in einem separaten Verfahrensschritt bearbeitet werden, um sie für das folgende Anschweißen der neuen Schaufel 14 vorzubereiten. Eine neue Schaufel 14 mit einer zweiten Schweißkontaktfläche 32 an ihrem Schaufelhals 18 wird nun analog zum Herstellungsverfahren an den Rotorgrundkörper 12 angeschweißt. Zum Abschluss des Reparaturverfahrens werden die Einsatzstücke 24 in die Freiräume neben der neuen Schaufel 14 eingefügt. Die Einsatzstücke 24 können in diesem Schritt natürlich auch ausgetauscht werden.

## Patentansprüche

1. Verfahren zur Herstellung eines integral beschaufelten Rotors (10), insbesondere eines Rotors (10) einer Gasturbine, umfassend die folgenden Verfahrensschritte:
a) Bereitstellen eines Rotorgrundkörpers (12) mit ersten Schweißkontaktflächen (30);
b) Bereitstellen von Schaufeln (14), die einen Schaufelhals (18) mit einer zweiten Schweißkontaktfläche (32) aufweisen; und
c) Schweißen der Schaufeln (14) an den Rotorgrundkörper (12) an der ersten und der zweiten Schweißkontaktfläche (30, 32) derart, dass in Umfangsrichtung benachbarte Schaufelhälse (18) des Rotors (10) voneinander beabstandet sind und ein Freiraum zwischen benachbarten Schaufelhälsen (18) vorgesehen ist,
wobei nach dem Schweißen jeweils ein Einsatzstück (24) in den Freiraum zwischen den Schaufelhälsen (18) benachbarter Schaufeln (14) eingebracht wird,
**dadurch gekennzeichnet, dass** mehrere Einsatzstücke (24) miteinander verbunden sind.

2. Verfahren nach Anspruch 1, **dadurch gekennzeichnet, dass** die Schaufeln (14) monokristallin sind.

3. Verfahren nach Anspruch 1 oder 2, **dadurch gekennzeichnet, dass** der Rotorgrundkörper (12) polykristallin ist.

4. Verfahren nach einem der vorhergehenden Ansprüche, **dadurch gekennzeichnet, dass** die Schaufeln (14) durch oszillierendes Reibschweißen oder induktives Hochfrequenzpressschweißen am Rotorgrundkörper (12) angeschweißt werden.

5. Verfahren nach Anspruch 4, **dadurch gekennzeichnet, dass** die Schaufeln (14) durch lineares Reibschweißen am Rotorgrundkörper (12) angeschweißt werden.

6. Verfahren nach einem der vorhergehenden Ansprüche, **dadurch gekennzeichnet, dass** das Einsatzstück (24) eine Dichtung zwischen den Schaufelhälsen (18) bildet.

7. Verfahren nach einem der vorhergehenden Ansprüche, **dadurch gekennzeichnet, dass** das Einsatzstück (24) ein Dämpfungselement ist.

8. Verfahren nach einem der vorhergehenden Ansprüche, **dadurch gekennzeichnet, dass** das Einsatzstück (24) mit seiner radialen Außenfläche abschnittsweise den gasdurchströmten Ringraum begrenzt.

9. Verfahren nach einem der vorhergehenden Ansprüche, **dadurch gekennzeichnet, dass** alle Einsatzstücke (24) zu einem Ring verbunden sind, welcher in axialer Richtung in den Rotor (10) eingesetzt wird.

10. Verfahren nach einem der vorhergehenden Ansprüche, **dadurch gekennzeichnet, dass** ein Kanal (26) zwischen Einsatzstück (24) und Rotorgrundkörper (12) vorgesehen ist, wobei der Kanal (26) insbesondere als Kanal (26) für ein Kühlungsfluid vorgesehen ist.

11. Verfahren nach einem der vorhergehenden Ansprüche, **dadurch gekennzeichnet, dass** der Kanal (26) zwischen Einsatzstück (24) und Rotorgrundkörper (12) wenigstens teilweise durch eine Einkerbung im Rotorgrundkörper (12) und/oder den Schaufeln (14) gebildet wird.

12. Verfahren nach einem der vorhergehenden Ansprüche, **dadurch gekennzeichnet, dass** das Einsatzstück (24) formschlüssig oder stoffschlüssig mit den benachbarten Schaufeln (14) und/oder mit dem Rotorgrundkörper (12) verbunden ist.

13. Verfahren nach einem der vorhergehenden Ansprüche, **dadurch gekennzeichnet, dass** die Schaufeln (14) ein radial äußeres Deckband haben.

14. Verfahren nach Anspruch 13, **dadurch gekennzeichnet, dass** die Schaufeln (14) an ihren radial äußeren Enden ein Deckbandsegment angeformt haben

15. Verfahren nach Anspruch 14, **dadurch gekennzeichnet, dass** die Deckbandsegmente nach dem Anschweißen der Schaufeln (14) umfangsmäßig beabstandet sind oder aneinander anliegen.

16. Verfahren nach Anspruch 15, **dadurch gekennzeichnet, dass** eine Verschlußeinrichtung nach dem Schweißen an den Deckbandsegmenten angebracht wird, die eine umfangsmäßig durchgehende Deckbandeinrichtung erzeugt.

## Claims

1. Method for the production of an integrally bladed rotor (10), in particular a rotor (10) of a gas turbine, comprising the following method steps:
a) provision of a rotor base body (12) having first welded contact surfaces (30);
b) provision of blades (14) which have a blade neck (18) having a second welded contact surface (32); and
c) welding of the blades (14) to the rotor base body (12) on the first and the second welded contact surface (30, 32) in such a way that blade necks (18) of the rotor (10) which are adjacent in the peripheral direction are spaced apart from one another and a free space is provided between adjacent blade necks (18),
wherein, after the welding, in each case an insertion piece (24) is introduced into the free space between the blade necks (18) of adjacent blades (14), **characterised in that** several insertion pieces (24) are connected to one another.

2. Method according to claim 1, **characterised in that** the blades (14) are monocrystalline.

3. Method according to claim 1 or 2, **characterised in that** the rotor base body (12) is polycrystalline.

4. Method according to one of the preceding claims, **characterised in that** the blades (14) are welded onto the rotor base body (12) by oscillating friction welding or inductive high-frequency pressure welding.

5. Method according to claim 4, **characterised in that** the blades (14) are welded onto the rotor base body (12) by linear friction welding.

6. Method according to one of the preceding claims, **characterised in that** the insertion piece (24) forms a seal between the blade necks (18).

7. Method according to one of the preceding claims, **characterised in that** the insertion piece (24) is an attenuating element.

8. Method according to one of the preceding claims, **characterised in that** the insertion piece (24) limits the annular space, through which gas flows, in sections with its radial exterior surface.

9. Method according to one of the preceding claims, **characterised in that** all insertion pieces (24) are connected to form a ring which is inserted into the rotor (10) in the axial direction.

10. Method according to one of the preceding claims, **characterised in that** a channel (26) is provided between the insertion piece (24) and the rotor base body (12), wherein the channel (26) is provided in particular as a channel (26) for a cooling fluid.

11. Method according to one of the preceding claims, **characterised in that** the channel (26) between the insertion piece (24) and the rotor base body (12) is formed at least partially by an indentation in the rotor base body (12) and/or the blades (14).

12. Method according to one of the preceding claims, **characterised in that** the insertion piece (24) is connected to the adjacent blades (14) and/or to the rotor base body (12) in a positive or firm manner.

13. Method according to one of the preceding claims, **characterised in that** the blades (14) have a radially exterior cover band.

14. Method according to claim 13, **characterised in that** the blades (14) have a cover band segment moulded on their radially exterior ends.

15. Method according to claim 14, **characterised in that** the cover band segments are spaced apart peripherally or abut onto one another after welding on the blades (14).

16. Method according to claim 15, **characterised in that** a closing device is attached to the cover band segments after welding which generates a cover band device which passes through peripherally.

## Revendications

1. Procédé de fabrication d'un rotor (10) aubagé monobloc, en particulier d'un rotor (10) d'une turbine à gaz, comprenant les étapes suivantes :
a) préparation d'un corps de base (12) de rotor avec des premières surfaces de contact à souder (30) ;
b) préparation d'aubes (14), présentant un col (18) d'aube avec une deuxième surface de contact à souder (32) ; et
c) soudage des aubes (14) contre le corps de base (12) de rotor sur la première et la deuxième surfaces de contact à souder (30, 32) de manière à espacer les cols (18) d'aube du rotor (10) adjacents dans la direction périphérique et à prévoir un espace libre entre les cols (18) d'aube adjacents,
une pièce intercalaire (24) étant mise en place dans l'espace libre entre les cols (18) d'aubes (14) adjacentes après soudage,
**caractérisé en ce que** plusieurs pièces intercalaires (24) sont raccordées entre elles.

2. Procédé selon la revendication 1, **caractérisé en ce que** les aubes (14) sont monocristallines.

3. Procédé selon la revendication 1 ou 2, **caractérisé en ce que** le corps de base (12) de rotor est polycristallin.

4. Procédé selon l'une des revendications précédentes, **caractérisé en ce que** les aubes (14) sont soudées contre le corps de base (12) de rotor par soudage par friction oscillant ou par soudage par induction à haute fréquence.

5. Procédé selon la revendication 4, **caractérisé en ce que** les aubes (14) sont soudées contre le corps de base (12) de rotor par soudage par friction linéaire.

6. Procédé selon l'une des revendications précédentes, **caractérisé en ce que** la pièce intercalaire (24) forme un joint entre les cols (18) d'aube.

7. Procédé selon l'une des revendications précédentes, **caractérisé en ce que** la pièce intercalaire (24) est un élément d'amortissement.

8. Procédé selon l'une des revendications précédentes, **caractérisé en ce que** la pièce intercalaire (24) délimite partiellement l'espace annulaire traversé par les gaz par sa surface radiale extérieure.

9. Procédé selon l'une des revendications précédentes, **caractérisé en ce que** toutes les pièces intercalaires (24) sont raccordées pour former un anneau mis en place dans le rotor (10) en direction axiale.

10. Procédé selon l'une des revendications précédentes, **caractérisé en ce qu'**un canal (26) est prévu entre la pièce intercalaire (24) et le corps de base (12) de rotor, ledit canal (26) étant en particulier prévu comme canal (26) pour un fluide réfrigérant.

11. Procédé selon l'une des revendications précédentes, **caractérisé en ce que** le canal (26) entre la pièce intercalaire (24) et le corps de base (12) de rotor est formé au moins en partie par une encoche dans le corps de base (12) de rotor et/ou dans les aubes (14).

12. Procédé selon l'une des revendications précédentes, **caractérisé en ce que** la pièce intercalaire (24) est raccordée aux aubes (14) adjacentes et/ou au corps de base (12) de rotor par accouplement mécanique ou par liaison de matière.

13. Procédé selon l'une des revendications précédentes, **caractérisé en ce que** les aubes (14) comportent un bandage radialement extérieur.

14. Procédé selon la revendication 13, **caractérisé en ce que** les aubes (14) comportent un segment de bandage formé à leurs extrémités radialement extérieures.

15. Procédé selon la revendication 14, **caractérisé en ce que** les segments de bandage sont espacés sur la périphérie ou sont accolés l'un contre l'autre après soudage des aubes (14).

16. Procédé selon la revendication 15, **caractérisé en ce qu'**un dispositif de scellement est appliqué contre les segments de bandage après soudage, lequel produit un système de bandage continu sur la périphérie.
